# EUROPÄISCHE PATENTANMELDUNG

(11) **EP 1 398 227 A1**
(43) Veröffentlichungstag der Anmeldung: **17.03.2004**
(21) Anmeldenummer: 03016687.0
(22) Anmeldetag: 01.08.2003
(51) Int. Cl.: B60R 21/20

(54) **Airbagmodul sowie Baugruppe aus einem Lenkrad und einem Airbagmodul**

(30) Priorität: 09.09.2002 DE 20213908 U
(71) Anmelder: TRW Automotive Safety Systems GmbH, 63743 Aschaffenburg (DE)
(72) Erfinder: Schneider, Michael, Dr. Ing., 63843 Niedernberg (DE); Helmstetter, Matthias, 63743 Aschaffenburg (DE)
(74) Vertreter: Strass, Jürgen

(57) **Zusammenfassung**

Ein Airbagmodul umfaßt einen Gasgeneratorträger. Am Gasgeneratorträger (26) ist eine Blattfeder (10) angebracht, die einen durchgehenden ringförmigen inneren Abschnitt (12) und mehrere Schenkel (14) aufweist. Die Schenkel weisen jeweils ein erstes, am inneren Abschnitt (12) angeformtes Ende (14a) und ein zweites, freies Ende (14b) auf, das bezogen auf die Mittelachse (16) der Blattfeder (10) axial weggebogen ist. Die Schenkel (14) sind unter axialem Druck elastisch verformbar.

## Beschreibung

Die Erfindung betrifft ein Airbagmodul mit einem Gasgeneratorträger sowie eine Baugruppe aus einem Lenkrad und einem Airbagmodul mit einem Gasgeneratorträger.

In der Regel sind zur Bereitstellung einer Rückstellkraft für ein in Richtung der Mittelachse eines Lenkrads verschieblich gehaltenes Airbagmodul mehrere Federelemente vorgesehen. Ferner sind Führungselemente erforderlich, die eine Bewegung des Airbagmoduls in axialer, nicht aber in radialer Richtung zulassen. Schließlich werden noch zusätzliche Elemente zur Herstellung des Hupkontakts benötigt. Die hohe Zahl an Einzelteilen erhöht sowohl den Montageaufwand als auch die Montagekosten.

Die Erfindung schafft ein in Richtung der Mittelachse eines Lenkrads verschiebbares Airbagmodul, dessen Einbau in das Lenkrad weniger Teile und einen reduzierten Montageaufwand erfordert.

Gemäß der Erfindung ist bei einem Airbagmodul vorgesehen, daß am Gasgeneratorträger eine Blattfeder angebracht ist, die einen durchgehenden ringförmigen inneren Abschnitt und mehrere Schenkel umfaßt, welche jeweils ein erstes, am inneren Abschnitt angeformtes Ende und ein zweites, freies Ende aufweisen, das bezogen auf die Mittelachse der Blattfeder axial weggebogen ist, wobei die Schenkel unter axialem Druck elastisch verformbar sind. Die leicht einzubauende Blattfeder liefert alleine die erforderliche Rückstellkraft, wenn das gesamte Airbagmodul zur Betätigung der Hupe niedergedrückt wird.

Gemäß einer bevorzugten Ausführungsform der Erfindung ist die Blattfeder ein Stanzbiegeteil aus Blech, bei dem die ersten Enden der Schenkel am Außenumfang des inneren Abschnitts angeformt sind. Eine solche Blattfeder kann kostengünstig in der gewünschten Form hergestellt werden. Vorzugsweise ist der innere Abschnitt am Gasgeneratorträger befestigt und die Schenkel sind vom Gasgeneratorträger weggebogen, so daß die Blattfeder vor dem Einbau des erfindungsgemäßen Airbagmoduls bereits an diesem vormontiert werden kann.

Eine Weiterbildung der Erfindung sieht vor, daß am Gasgeneratorträger gegenüber wenigstens einem Schenkel der Blattfeder wenigstens ein Kontakt vorgesehen ist, der durch eine Bewegung des Gasgeneratorträgers in Richtung der Mittelachse der Blattfeder gegen den Widerstand der Blattfeder in Kontakt mit dem Schenkel kommt und so einen Stromkreis zur Auslösung eines Hupsignals schließt. Somit kann die Blattfeder auch zur Herstellung des Hupkontakts genutzt werden und macht den Einbau entsprechender Gegenkontakte überflüssig. Besonders kostengünstig und montagefreundlich erweist sich das erfindungsgemäße Airbagmodul mit einem aus Kunststoff gefertigten Gasgeneratorträger, bei dem der Kontakt in den Gasgeneratorträger eingespritzt ist.

Die Erfindung schafft auch eine Baugruppe aus einem Lenkrad und einem Airbagmodul mit einem Gasgeneratorträger, bei der zwischen dem Gasgeneratorträger und dem Lenkrad eine Blattfeder angebracht ist, die einen durchgehenden ringförmigen inneren Abschnitt und mehrere Schenkel umfaßt, welche jeweils ein erstes, am inneren Abschnitt angeformtes und ein zweites, freies Ende aufweisen, das in Richtung der Mittelachse der Blattfeder weggebogen ist, wobei die Schenkel unter axialem Druck elastisch verformbar sind. Bei einer solchen Baugruppe wird die Blattfeder nicht am Gasgeneratorträger, sondern am Lenkrad befestigt, bevor das Airbagmodul dann auf die Blattfeder aufgesetzt wird.

Um die Blattfeder bei der erfindungsgemäßen Baugruppe zum Auslösen der Hupe zu nutzen, sind die Schenkel der Blattfeder mit Ausnahme eines Bereichs zur Herstellung eines Hupkontakts gegenüber dem Lenkrad elektrisch isoliert, insbesondere durch eine Kunststoffumspritzung.

Gemäß einer Weiterbildung der Erfindung ist im Lenkrad eine der Blattfeder entsprechende Gegenform gebildet, die eine Führung in Richtung der Mittelachse des Lenkrads erlaubt. Auf ansonsten erforderliche Befestigungs- oder Führungseinrichtungen kann somit verzichtet werden. Die Gegenform kann als Schlitz oder alternativ als Erhöhung ausgeführt sein.

Alternativ zur Befestigung der Blattfeder am Gasgeneratorträger kann bei der erfindungsgemäßen Baugruppe der innere Abschnitt auch am Lenkrad befestigt und die Schenkel vom Lenkrad weg in Richtung des Gasgeneratorträgers gebogen sein.

Weitere Merkmale und Vorteile der Erfindung ergeben sich aus der folgenden Beschreibung und aus den beigefügten Zeichnungen, auf die Bezug genommen wird, in den Zeichnungen zeigen:

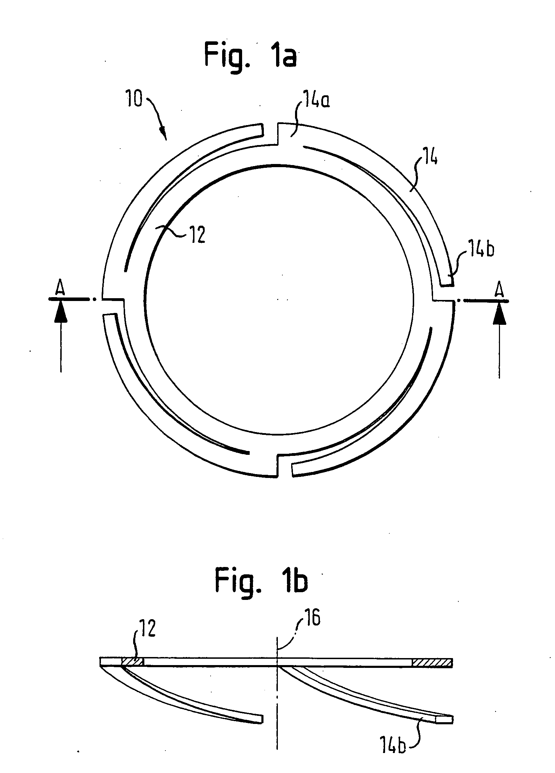

- Figur 1 a eine Draufsicht einer ringförmigen Blattfeder;
- Figur 1 b eine Schnittansicht der Blattfeder aus Figur 1a entlang der Linie A-A;
- Figur 2 eine Schnittansicht eines Lenkrads mit einem Airbagmodul gemäß der Erfindung; und
- Figuren 3a und 3b jeweils eine perspektivische Ansicht eines Lenkrads mit einer Aufnahme für die Blattfeder.

In den Figuren 1a und 1b ist eine ringförmige Blattfeder 10 dargestellt, die, wie nachfolgend noch beschrieben wird, zwischen dem Gasgeneratorträger eines Airbagmoduls und einem Lenkrad eingebaut wird. Die Blattfeder 10 weist einen durchgehenden ringförmigen inneren Abschnitt 12 auf. Außerhalb des inneren Abschnitts 12 sind vier gleiche teilringförmige Schenkel 14 gebildet, die sich gemäß der Darstellung der Figur 1a tangential entlang des Außenumfangs des inneren Abschnitts 12 erstrecken und jeweils an einem ersten Ende 14a mit dem Außenumfang des inneren Abschnitts 12 verbunden sind. Gemäß der Darstellung in Figur 1b sind die freien zweiten Enden 14b der Schenkel 14 bezüglich der Mittelachse 16 der Blattfeder 10 axial nach unten weggebogen. Die Blattfeder 10 besteht aus Blech und ist als Stanzbiegeteil mit vorzugsweise drei oder vier Schenkeln 14 ausgeführt, es können aber auch weniger oder mehr Schenkel 14 vorgesehen sein. Die Blattfeder 10 ist so ausgelegt, daß sich, wenn sie auf den gebogenen Schenkeln 14 aufliegt, die Schenkel 14 bei einem nach unten gerichteten Druck auf den inneren Abschnitt 12 elastisch verformen und eine nach oben gerichtete Rückstellkraft liefern.

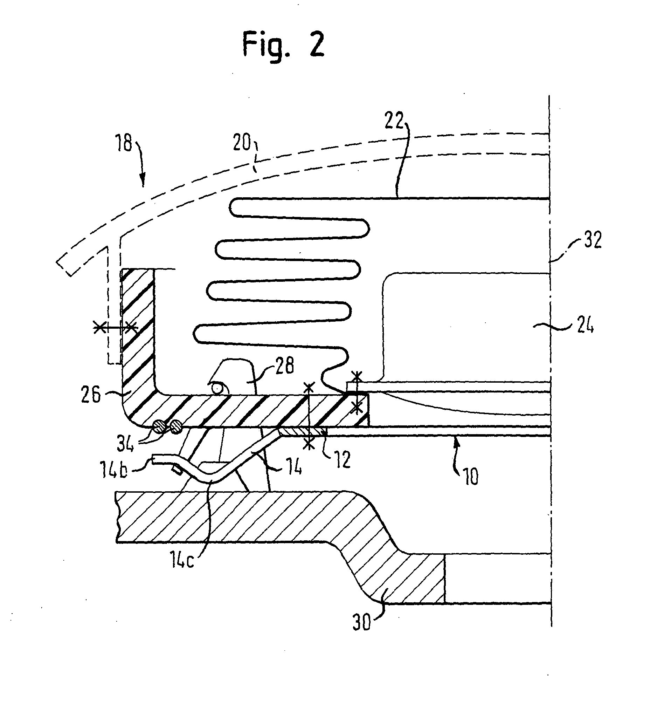

Figur 2 zeigt ein Airbagmodul 18 mit einer Abdeckung 20, einem Gassack 22, einem Gasgenerator 24 und einem Gasgeneratorträger 26. Das Airbagmodul 18, genauer gesagt dessen Gasgeneratorträger 26, ist mittels einer herkömmlichen Befestigungseinrichtung 28 auf einem Lenkrad 30 gehalten, wobei die Befestigungseinrichtung 28 eine Bewegung des Airbagmoduls 18 in Richtung der Mittelachse 32 des Lenkrads 30 zuläßt. Zwischen Gasgeneratorträger 26 und Lenkrad 30 ist konzentrisch zur Mittelachse 32 des Lenkrads 30 eine ringförmige Blattfeder 10 vorgesehen, wie sie anhand der Figuren 1a und 1b beschrieben wurde, bei der aber die Schenkel 14 auch radial nach außen weggebogen sind. Außerdem sind die Schenkel 14, wie aus Figur 2 ersichtlich ist, so gebogen, daß sie sich nicht mit den freien Enden 14b, sondern mit den Auflageabschnitten 14c auf einer gegenüberliegenden Fläche des Lenkrads 30 abstützen, wobei sich der innere Abschnitt 12 der Blattfeder 10 auf der Unterseite des Gasgeneratorträgers 26 abstützt und fest mit diesem verbunden ist. Zwischen den Schenkeln 14 und dem Lenkrad 30 ist dagegen keine feste Verbindung vorgesehen. Es ist auch möglich, die Blattfeder 10 um 180° verdreht einzubauen, so daß der innere Abschnitt 12 am Lenkrad 30 befestigt ist.

Die Blattfeder 10 sorgt für die erforderliche Rückstellkraft, wenn nach dem Niederdrücken des Airbagmoduls 18 zum Auslösen eines Hupsignals das Airbagmodul 18 wieder in seine in Figur 2 gezeigte Ausgangsstellung zurückgeschoben werden soll.

Bei der in Figur 2 gezeigten Ausführungsform mit einem Kunststoffgasgeneratorträger 26 wird der Hupkontakt zum Auslösen des Hupsignals über die Blattfeder 10 selbst hergestellt. Am Gasgeneratorträger 26 sind gegenüber dem freien Ende 14b eines Schenkels 14 der Blattfeder 10 Metallkontakte 34 eingespritzt. Der Schenkel 14 ist so gebogen, daß beim Absenken des Airbagmoduls 18 durch Druck auf die Abdeckung 20 die Kontakte 34 auf das freie Ende 14b des Schenkels 14 treffen und so einen Stromkreis schließen, der die Auslösung des Hupsignals bewirkt. Die Schenkel 14 sind mit Ausnahme des Bereichs, der in Kontakt mit den Kontakten 34 kommt, gegenüber dem Lenkrad 30 elektrisch isoliert, beispielsweise durch eine Kunststoffumspritzung.

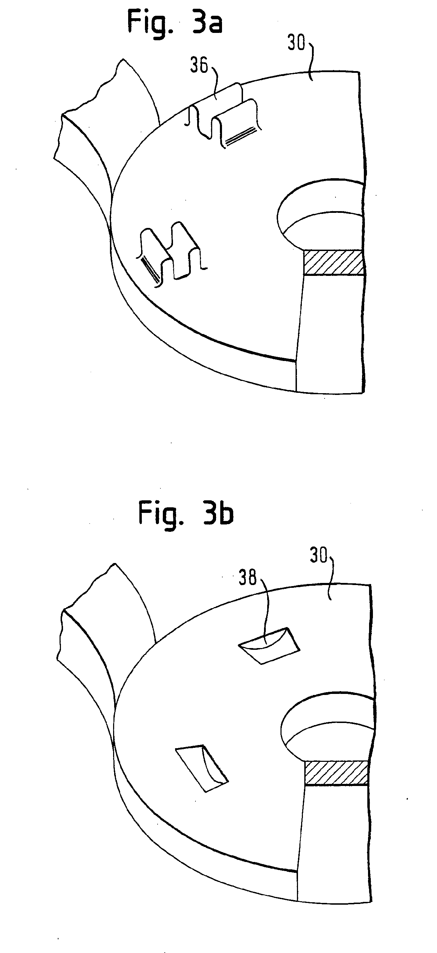

In den Figuren 3a und 3b ist angedeutet, daß im Lenkrad 30 eine Aufnahme für die Blattfeder 10 vorgesehen ist. Diese Aufnahme kann beispielsweise durch erhöhte Bereiche 36 (Figur 3a) oder durch Vertiefungen 38 (Figur 3b) gebildet sein und erlaubt eine Führung der Blattfeder 10 und damit des gesamten Airbagmoduls 18 in Richtung der Mittelachse 32 des Lenkrads 30. Eine Bewegung in radialer Richtung bezogen auf die Mittelachse 32 wird durch den Formschluß an den Schenkeln 14 der Blattfeder 10 ausgeschlossen. Eine Verklemmung der Blattfeder 10 in der Führung erfolgt nicht, da die Schenkel 14 im Verhältnis zu ihrer radialen Breite nur eine geringe Höhe aufweisen.

## Patentansprüche

1. Airbagmodul mit einem Gasgeneratorträger (26), **dadurch gekennzeichnet, daß** am Gasgeneratorträger (26) eine Blattfeder (10) angebracht ist, die einen durchgehenden ringförmigen inneren Abschnitt (12) und mehrere Schenkel (14) umfaßt, welche jeweils ein erstes, am inneren Abschnitt (12) angeformtes Ende (14a) und ein zweites, freies Ende (14b) aufweisen, das bezogen auf die Mittelachse (16) der Blattfeder (10) axial weggebogen ist, wobei die Schenkel (14) unter axialem Druck elastisch verformbar sind.

2. Airbagmodul nach Anspruch 1, **dadurch gekennzeichnet, daß** die Blattfeder (10) ein Stanzbiegeteil aus Blech ist.

3. Airbagmodul nach Anspruch 1 oder 2, **dadurch gekennzeichnet, daß** die ersten Enden (14a) der Schenkel (14) am Außenumfang des inneren Abschnitts (12) angeformt sind.

4. Airbagmodul nach einem der vorherigen Ansprüche, **dadurch gekennzeichnet, daß** die Blattfeder (10) nicht weniger als drei und nicht mehr als vier Schenkel (14) umfaßt.

5. Airbagmodul nach einem der vorhergehenden Ansprüche, **dadurch gekennzeichnet, daß** der innere Abschnitt (12) am Gasgeneratorträger (26) befestigt ist und die Schenkel (14) vom Gasgeneratorträger (26) weggebogen sind.

6. Airbagmodul nach einem der vorhergehenden Ansprüche, **dadurch gekennzeichnet, daß** am Gasgeneratorträger (26) gegenüber wenigstens einem Schenkel (14) der Blattfeder (10) wenigstens ein Kontakt (34) vorgesehen ist, der durch eine Bewegung des Gasgeneratorträgers in Richtung der Mittelachse der Blattfeder (10) gegen den Widerstand der Blattfeder (10) in Kontakt mit dem Schenkel (14) kommt und so einen Stromkreis zur Auslösung eines Hupsignals schließt.

7. Airbagmodul nach Anspruch 6, **dadurch gekennzeichnet, daß** der Gasgeneratorträger (26) aus Kunststoff gefertigt und der Kontakt (34) in den Gasgeneratorträger (26) eingespritzt ist.

8. Baugruppe aus einem Lenkrad und einem Airbagmodul mit einem Gasgeneratorträger, **dadurch gekennzeichnet, daß** zwischen dem Gasgeneratorträger (26) und dem Lenkrad (30) eine Blattfeder (10) angebracht ist, die einen durchgehenden ringförmigen inneren Abschnitt (12) und mehrere Schenkel (14) umfaßt, welche jeweils ein erstes, am inneren Abschnitt an geformtes Ende (14a) und ein zweites, freies Ende (14b) aufweisen, das in Richtung der Mittelachse (16) der Blattfeder (10) weggebogen ist, wobei die Schenkel (14) unter axialem Druck elastisch verformbar sind.

9. Baugruppe nach Anspruch 8, **dadurch gekennzeichnet, daß** die Schenkel (14) der Blattfeder (10) mit Ausnahme eines Bereichs zur Herstellung eines Hupkontakts gegenüber dem Lenkrad (30) elektrisch isoliert sind, insbesondere durch eine Kunststoffumspritzung.

10. Baugruppe nach Anspruch 8 oder 9, **dadurch gekennzeichnet, daß** im Lenkrad (30) eine Aufnahme für die Blattfeder (10) vorgesehen ist, die eine Führung des Airbagmoduls (18) in Richtung der Mittelachse (32) des Lenkrads (30) erlaubt.

11. Baugruppe nach Anspruch 10, **dadurch gekennzeichnet, daß** die Aufnahme durch erhöhte Bereiche (36) an der dem Airbagmodul (18) zugewandten Seite des Lenkrads (30) ausgeführt ist.

12. Baugruppe nach Anspruch 10, **dadurch gekennzeichnet, daß** die Aufnahme durch Vertiefungen (38) in der dem Airbagmodul (18) zugewandten Seite des Lenkrads (30) ausgeführt ist.

13. Baugruppe nach Anspruch 8, **dadurch gekennzeichnet, daß** der innere Abschnitt (12) am Lenkrad (30) befestigt ist und die Schenkel (14) vom Lenkrad (30) weg in Richtung des Gasgeneratorträgers (26) gebogen sind.
